# EUROPEAN PATENT APPLICATION

(11) **EP 4 374 971 A1**
(43) Date of publication of application: **29.05.2024**
(21) Application number: 22845404.7
(22) Date of filing: 21.07.2022
(51) Int. Cl.: B05B 15/70, B05B 13/02, B05B 15/68

(54) **CERAMIC COATING MECHANISM, AND ELECTRODE SHEET COATING SYSTEM AND METHOD**

(30) Priority: 23.07.2021 CN 202110839528
(71) Applicant: SVOLT ENERGY TECHNOLOGY CO., LTD, Changzhou, Jiangsu 213200 (CN)
(72) Inventor: WEI, Bo, hangzhou, Jiangsu 213200 (CN); WANG, Licong, hangzhou, Jiangsu 213200 (CN); XU, Chunlong, hangzhou, Jiangsu 213200 (CN); TAN, Weicai, hangzhou, Jiangsu 213200 (CN); LI, Pengfei, hangzhou, Jiangsu 213200 (CN)
(74) Representative: dompatent von Kreisler Selting Werner - Partnerschaft von Patent- und Rechtsanwälten mbB
(86) International application number: PCT/CN2022/107062
(87) International publication number: WO 2023/001241

(57) **Abstract**

A ceramic coating mechanism and a system and a method for pole piece coating relating to the technical field of battery preparation. The ceramic coating mechanism comprises ceramic coating nozzles which are configured to spray ceramic liquid on a substrate; a ceramic coating driving assembly which is drivably connected to the ceramic coating nozzles, such that the ceramic coating nozzles are configured to be moved to corresponding positions of the substrate; a ceramic coating guide rail on which the ceramic coating driving assembly is connected, the ceramic coating driving assembly is configured to drive the ceramic coating nozzles to move along an axial direction of the ceramic coating guide rail; and a frame on which the ceramic coating guide rail is arranged. The pole piece coating system comprises said ceramic coating mechanism. The pole piece coating method applies to said pole piece coating system. The ceramic coating mechanism and the system and the method for pole piece coating are able to solve, to a certain extent, the technical problem in the prior arts that the ceramic coating is influenced by the die clearance and the gasket size.

## Description

### CROSS-REFERENCE TO RELATED APPLICATION

This application claims priority to Chinese patent application No. 2021108395288 filed on July 23, 2021 entitled "Ceramic Coating Mechanism and System and Method for Pole Piece Coating", the disclosure of which is hereby incorporated by reference in its entirety.

### TECHNICAL FIELD

The present application relates to the technical field of battery preparation, more specifically to a ceramic coating mechanism and a system and a method for pole piece coating.

### BACKGROUND

In the environment of automobile industry using conventional energy as power supply, environmental pollution problems have attracted people's attention to environmental protection and resource utilization; as a result, new energy electric vehicles have been actively developed. Lithium-ion battery equipment technology is one of the key technologies for the development of electric vehicles.

In the lithium battery manufacturing industry, coating the edges of the pole pieces with ceramics can effectively prevent the cathode and anode from directly facing each other when the battery cell is fully charged, thereby avoiding the risk of short-circuiting the battery cell. Ceramic coating automatic control technology is one of the more advanced lithium-ion battery manufacturing technologies at present; wherein ceramic coating is the key to this technology and the developing trend of this technology.

In the existing coating equipment, ceramics pass through a gasket flow channel and being coated together with slurry from a die, clearance of the die is determined by size and surface density of the slurry. Under the influence of the die clearance and gasket size, it is difficult to ensure that the size, thickness and surface density of the ceramics can reach optimal values, and the gasket size needs to be optimized multiple times.

### SUMMARY

Objects of the present application is to provide a ceramic coating mechanism and a system and a method for pole piece coating to solve, to a certain extent, the technical problem in the prior arts that the ceramic coating is influenced by the die clearance and the gasket size.

To achieve the above-mentioned objects, the present application provides the following technical solutions.

A ceramic coating mechanism comprises:
ceramic coating nozzles which are configured to spray a ceramic liquid on a substrate;
a ceramic coating driving assembly which is drivably connected to the ceramic coating nozzles, such that the ceramic coating nozzles are configured to be moved to corresponding positions of the substrate;
a ceramic coating guide rail on which the ceramic coating driving assembly is connected, the ceramic coating driving assembly is configured to drive the ceramic coating nozzles to move along an axial direction of the ceramic coating guide rail; and
a frame on which the ceramic coating guide rail is arranged.

Optionally, in any one of the above technical solutions said ceramic coating mechanism further comprises a video monitoring assembly arranged on the frame;
the video monitoring assembly is positioned on the downstream of the ceramic coating nozzles along a movement direction of the substrate;
the video monitoring assembly is configured to collect image information of the ceramic-coated surface of the substrate.

Optionally, in any one of the above technical solutions said video monitoring assembly comprises a CCD camera;
the CCD camera is one or more CCD cameras;
at least one of said CCD cameras is arranged in the center of the frame along a width direction of the frame.

Optionally, in any one of the above technical solutions said ceramic coating mechanism further comprises a ceramic coating transmission assembly; the ceramic coating driving assembly is drivably connected to the ceramic coating nozzles via the ceramic coating transmission assembly.

Optionally, in any one of the above technical solutions said ceramic coating transmission assembly comprises a gear wheel and a gear rack that meshes with the gear wheel; the ceramic coating transmission assembly is drivably connected to the gear wheel such that the gear wheel is configured rotatable; the ceramic coating nozzles are arranged on the gear rack and move with the movement of the gear rack.

Optionally, in any one of the above technical solutions there are a plurality of ceramic coating driving assemblies, each of which is drivably connected to one of the ceramic coating nozzles; the plurality of ceramic coating driving assemblies are successively arranged in spaced-apart relationship on the ceramic coating guide rail along the axial direction of the ceramic coating guide rail.

Optionally, in any one of the above technical solutions said ceramic coating nozzles are arranged in pairs.

Optionally, in any one of the above technical solutions said ceramic coating driving assembly comprises a servo motor.

A pole piece coating system comprises the above-mentioned ceramic coating mechanism.

Optionally, in any one of the above technical solutions the pole piece coating system further comprises:
a transmission mechanism, which is arranged on the frame and is configured to transmit the movement of the substrate; the ceramic coating nozzles are positioned on a side of the substrate which is far from the transmission mechanism;
a slurry coating mechanism, which is arranged on the frame, is positioned on the same side of the substrate as the ceramic coating nozzles and is configured to spray slurry on the substrate; the slurry coating mechanism is positioned on the upstream of the ceramic coating nozzles along the movement direction of the substrate.

Optionally, in any one of the above technical solutions the pole piece coating system further comprises:
a ceramic feeding driving assembly which is configured to supply the ceramic liquid to the ceramic coating nozzles;
a slurry feeding driving assembly which is configured to supply slurry to the slurry coating mechanism;
a control mechanism which is electrically connected with the ceramic coating driving assembly; the video monitoring assembly, the ceramic feeding driving assembly and the slurry feeding driving assembly are respectively electrically connected to the control mechanism; the video monitoring assembly is configured to send the monitored image information to the control mechanism such that the control mechanism controls the ceramic feeding driving assembly and the slurry feeding driving assembly correspondingly.

A pole piece coating method applies to the above-mentioned pole piece coating system; said pole piece coating method includes:
inputting information: inputting a width information of the substrate, a width information of pole piece regions to be produced and a width information of blank regions; wherein width of a pole piece region includes width of a slurry region and widths of ceramic regions;
arranging the ceramic coating nozzles in place: driving the ceramic coating nozzles to move along the axial direction of the ceramic coating guide rail by means of the ceramic coating driving assembly, so as to correspond the positions of the ceramic coating nozzles and the ceramic regions with each other;
coating: driving the slurry feeding driving assembly and the ceramic feeding driving assembly to start coating; the slurry feeding driving assembly feeds the slurry to the slurry coating mechanism, the latter coats the slurry on the substrate to form the slurry regions; the ceramic feeding driving assembly is configured to feed the ceramic liquid to the ceramic coating nozzles, the latter spray the ceramic liquid on the substrate to form the ceramic regions;
monitoring: collecting image information of the slurry regions, the ceramic regions and the blank regions on the substrate and send it to the control mechanism by means of the video monitoring assembly; the control mechanism correspondingly adjusts feeding speeds of the slurry feeding driving assembly and the ceramic feeding driving assembly; wherein the blank regions are regions of the substrate which are not coated with the slurry and the ceramic.

Optionally, in any one of the above technical solutions, in the step of inputting information, the pole piece region width information further comprises widths of blending regions located between the widths of the slurry regions and the widths of the ceramic regions;
in the step of monitoring, the control mechanism, based on the image information send by the video monitoring assembly, correspondingly controls the ceramic coating driving assembly to drive the ceramic coating nozzles to move for position adjustment.

The beneficial effects of this application are mainly as follows:
The ceramic coating mechanism and the system and the method for pole piece coating provided by the present application comprising ceramic coating nozzles, a ceramic coating driving assembly, a ceramic coating guide rail and a frame, axial movements of the ceramic coating nozzles along the ceramic coating guide rail are driven by the ceramic coating driving assembly such that the ceramic coating nozzles are configured to be moved to corresponding positions of the substrate, and the substrate is sprayed thereon a ceramic liquid to carry out ceramic coating; by spray the ceramic via separate nozzles, it is possible to effectively avoid the ceramic coating from being influenced by the die clearance and the gasket size, and thus ensure that the size, thickness and surface density of the ceramic can be controlled within optimal ranges.

In order to make the above-mentioned objects, features and advantages of the present application more obvious and easy to understand, a detailed description will be provided below by way of preferred embodiments in conjunction with the accompanying drawings.

### BRIEF DESCRIPTION OF THE DRAWINGS

In order to more clearly explain the specific embodiments of the present application or the technical solutions in the prior art, the accompanying drawings that need to be referred to in the description of the specific embodiments or the prior art will be briefly introduced below. It is apparent that the accompanying drawings in the below description are some of the embodiments of the present application and those of ordinary skill in the art can obtain other drawings based on these drawings without any creative effort.
Fig. 1 is a schematic structure view of a ceramic coating mechanism provided by an embodiment of the present application;
Fig. 2 is a schematic structure view of the ceramic coating mechanism provided by the embodiment of the present application from another view;
Fig. 3 is a left view of the ceramic coating mechanism shown in Fig. 2;
Fig. 4 is a top view of the ceramic coating mechanism shown in Fig. 2;
Fig. 5 is a partial enlarged view of a plurality of ceramic coating driving assemblies and ceramic coating nozzles shown in Fig. 4;
Fig. 6 is a partial enlarged view of one of the ceramic coating driving assemblies and ceramic coating nozzles shown in Fig. 4;
Fig. 7 is a schematic structure view of a substrate provided by an embodiment of the present application which is already coated with slurry and ceramic.

### List of reference numerals

110- ceramic coating nozzle; 120- ceramic coating driving assembly; 130- ceramic coating guide rail; 140- video monitoring assembly; 150- ceramic coating transmission assembly; 151- gear wheel; 152- gear rack; 200- substrate; 210- pole piece region; 211- slurry region; 212- ceramic region; 220- blank region; 300- frame; 400- transmission mechanism.

### DETAILED DESCRIPTION OF EMBODIMENTS

Technical solutions of the present application will be clearly and completely described below in conjunction with the accompanying drawings; the described embodiments are apparently parts rather than all of the embodiments of the present application. All other embodiments that obtained by those of ordinary skill in the art based on the embodiments of the present application without any creative effort are also within the scope of the present application.

It should be noted that the orientations or positional relationships indicated by the terms such as "central", "upper", "lower", "left", "right", "vertical", "horizontal", "inner", "outer" etc. are based on the orientations or positional relationships shown in the drawings, they are only intended for ease of description of the present application and simplicity of description rather than indicate or imply that the mentioned apparatuses or elements must have the particular orientations as well as being configured and operated in the particular orientations, and thus should not be construed as limiting of the present application. In addition, the terms "first", "second" and "third" are for the purpose of description only and should not be regarded as an indication or implication of relative importance.

In the description of the present application, it should also be noted that the terms "installed", "joined" and "connected" should be construed broadly unless otherwise specified or defined; for example, they may be construed as fixedly connected, detachably connected or integrally connected; mechanically connected or electrically connected; directly joined or joined with an intermediate media or joined by interiors of two elements. Those of ordinary skill in the art may understand the particular meanings of the above terms in the present application based on the particular circumstances.

### Embodiment

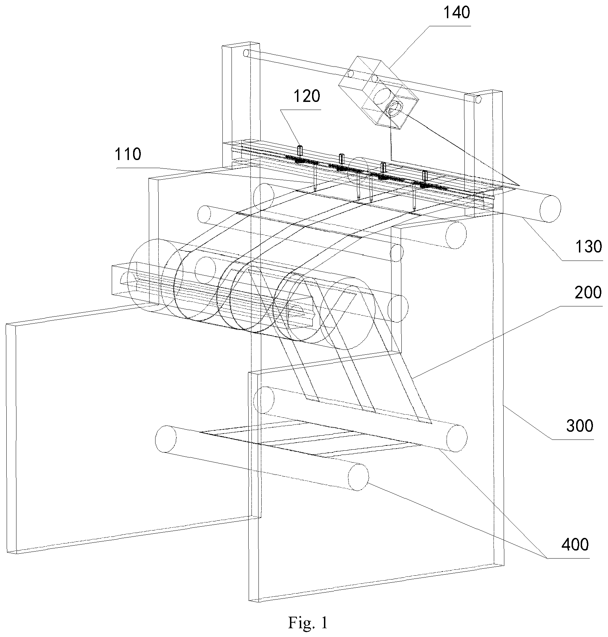

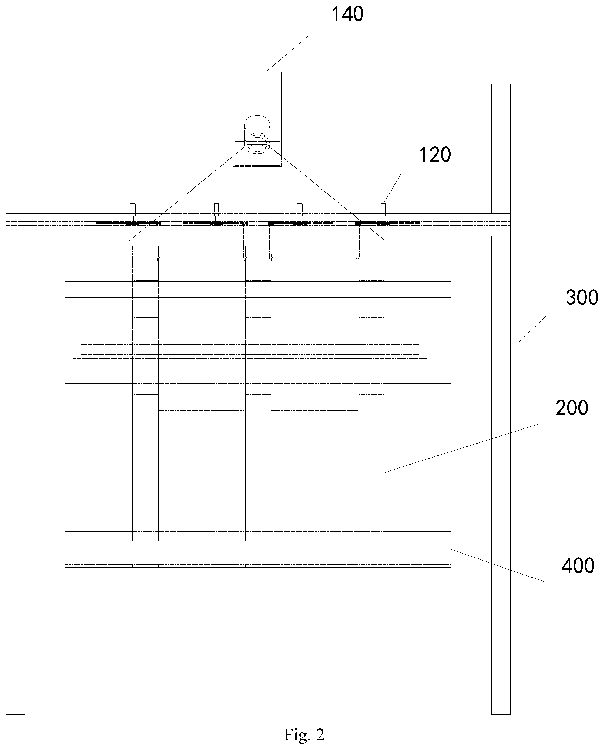

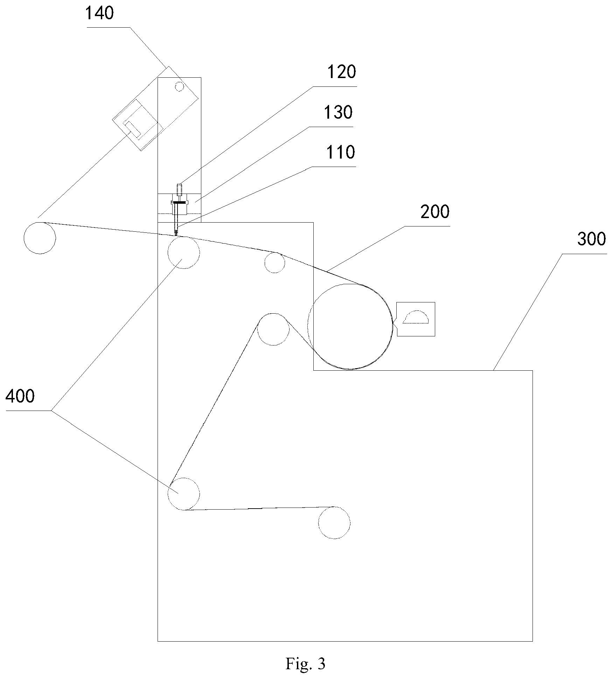

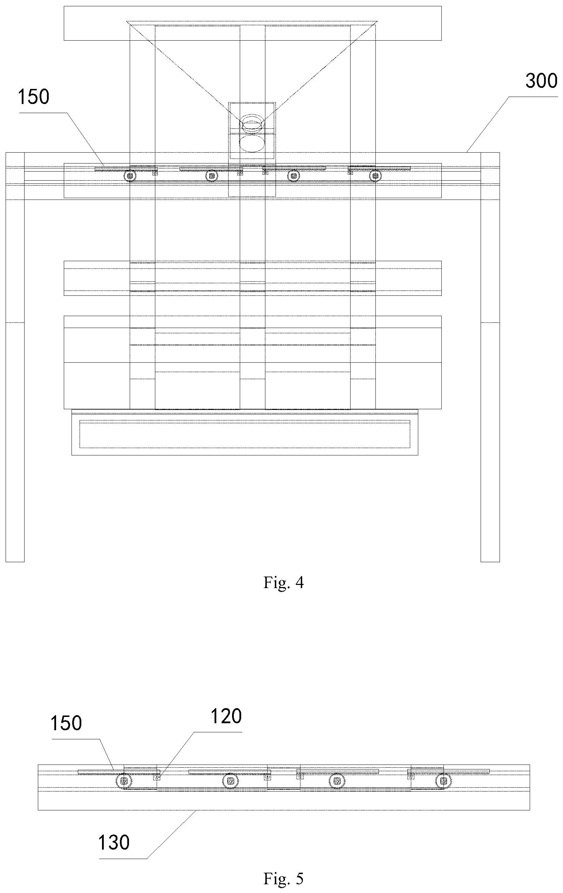

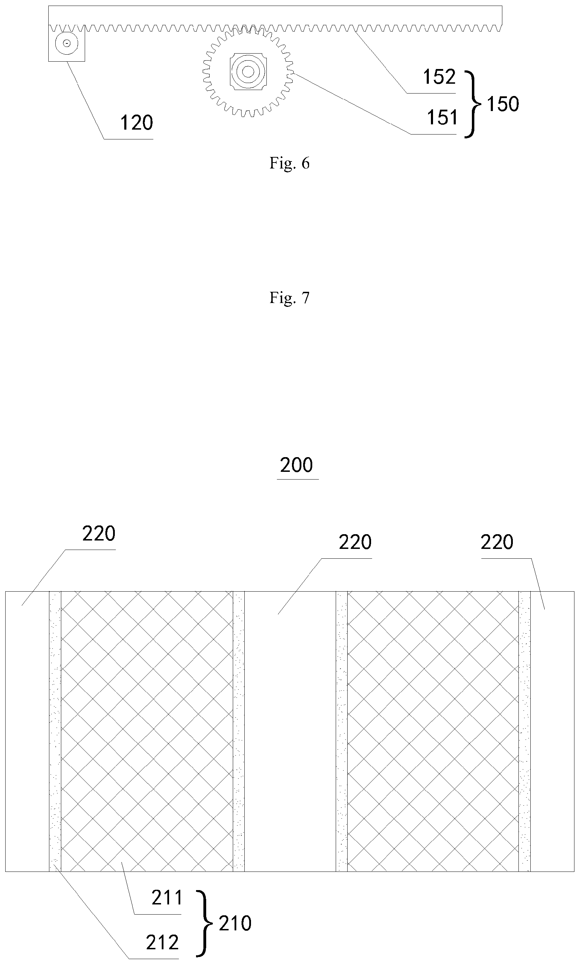

The present embodiment provides a ceramic coating mechanism and a system and a method for pole piece coating; reference is now made to Figs 1 to 7, Fig. 1 is a perspective view of a ceramic coating mechanism provided by the present embodiment, Fig. 2 is a front view of the ceramic coating mechanism provided by the present embodiment, Fig. 3 is a left view of the ceramic coating mechanism shown in Fig. 2, and Fig. 4 is a top view of the ceramic coating mechanism shown in Fig. 2; in order to show the structure more clearly, Fig. 5 is a partial enlarged view of a plurality of ceramic coating driving assemblies and ceramic coating nozzles shown in Fig. 4, Fig. 6 is a partial enlarged view of one of the ceramic coating driving assemblies and ceramic coating nozzles shown in Fig. 4. Fig. 7 is a schematic structure view of a substrate provided by an embodiment of the present application which is already coated with slurry and ceramic.

The ceramic coating mechanism provided by the present embodiment relates to the technical field of Lithium-ion for Lithium-ion battery preparation.

With reference to Figs 1 to 7, said ceramic coating mechanism comprises:
ceramic coating nozzles 110 which are configured to spray a ceramic liquid on a substrate 200;
a ceramic coating driving assembly 120 which is drivably connected to the ceramic coating nozzles 110, such that the ceramic coating nozzles 110 are configured to be moved to corresponding positions of the substrate 200; that is to say, the ceramic coating nozzles 110 are able to be moved to corresponding positions of the substrate 200 under the drive of the ceramic coating driving assembly 120;
a ceramic coating guide rail 130 on which the ceramic coating driving assembly 120 is connected, and the ceramic coating driving assembly 120 is configured to drive the ceramic coating nozzles 110 to move along an axial direction of the ceramic coating guide rail 130; that is to say, the ceramic coating driving assembly 120 is able to drive the ceramic coating nozzles 110 to move along the axial direction of the ceramic coating guide rail 130; optionally, the ceramic coating guide rail 130 extends along a width direction of the substrate 200; optionally, the ceramic coating driving assembly 120 is fixedly connected on the ceramic coating guide rail 130 to simplify the structure of the ceramic coating mechanism; and
a frame 300 on which the ceramic coating guide rail 130 is arranged; optionally, the ceramic coating guide rail 130 is fixedly arranged on the frame 300.

In the present embodiment, the substrate 200 is a current collector, for example a metallic foil such as copper foil, aluminum foil etc. For example, the substrate 200 may be an aluminum foil when it is an anode; and the substrate 200 may be a copper foil when it is a cathode.

In the present embodiment, the ceramic liquid is also a ceramic slurry, including such as ceramic particles (for example 11% to 94% by mass) and polymer binder; the ceramic particles include one or more of aluminum oxide, silicon oxide, magnesium oxide, calcium oxide, calcium carbonate, barium titanate BaTiO3, strontium titanate SrTiO3, barium sulfate BaSO4, tin oxide, cerium oxide, nickel oxide, zinc oxide, yttrium oxide, zirconium oxide, lanthanum oxide, silicon carbide, magnesium hydroxide, aluminum hydroxide, manganese hydroxide, lithium fast ion conductor Li7La3Zr2O12, La0.51Li0.34TiO2.94, Li1.3Al0.3Ti1.7(PO4)3, Li2+2xZn1-xGe4 (0<x<1). The polymer binder includes one or more of polytetrafluoroethylene, polyvinylidene fluoride, polyvinyl alcohol, polyethylene oxide, polyacrylonitrile, polyacrylic acid, acrylic resin; other common polymer binders in this field may also be used.

Said ceramic coating mechanism in the present embodiment comprises the ceramic coating nozzles 110, the ceramic coating driving assembly 120, the ceramic coating guide rail 130 and the frame 300, the ceramic coating nozzles 110 are driven to move along the axial direction of the ceramic coating guide rail 130 by the ceramic coating driving assembly 120 such that the ceramic coating nozzles 110 are configured to be moved to corresponding positions of the substrate 200 and spray the ceramic liquid on the substrate 200 to carry out ceramic coating; it is possible to effectively avoid the ceramic coating from being influenced by the die clearance and the gasket size by spraying the ceramic via separate nozzles, and thus ensure that the size, thickness and surface density of the ceramic can be controlled within optimal ranges.

With reference to Figs. 1 to 4, in an optional solution of the present embodiment, the ceramic coating mechanism further comprises a video monitoring assembly 140 arranged on the frame 300.

The video monitoring assembly 140 is positioned on the downstream of the ceramic coating nozzles 110 along a movement direction of the substrate 200; that is to say, after ceramic regions are formed by spraying the ceramic liquid on the substrate 200 via the ceramic coating nozzles 110, the video monitoring assembly 140 collects image information of the surface of the substrate 200 to facilitate automatic real-time monitoring, and the parameters of the ceramic coating nozzles 110 such as positions, spray speeds etc. may be adjusted based on the image information.

The video monitoring assembly 140 is configured to collect the image information of the ceramic-coated surface of the substrate 200.

In prior arts, size of the coated ceramic may be changed during the ceramic coating, and thus causing the problems of ceramic foil leakage, edge bulging etc. The ceramic coating mechanism described in the present embodiment is possible to effectively reduce the problems of foil leakage, edge bulging etc. due to the size change of the coated ceramic by means of the video monitoring assembly 140, and extremely improve the quality of ceramic coating by promptly adjust the ceramic coating nozzles 110 based on the image information; degrees of automation can be improved to avoid or reduce the problem of ceramic defect due to human negligence.

In an optional solution of the present embodiment, the video monitoring assembly 140 comprises a CCD camera; CCD camera is an abbreviation for "charge coupled device camera", having the advantages of small size, light weight, unaffected to magnetic fields, good vibration and impact resistance etc.

In an optional solution of the present embodiment, the CCD camera is one or more CCD cameras; defects on the substrate 200 can be better monitored by arranging one or more CCD cameras.

In an optional solution of the present embodiment, at least one of the CCD cameras is arranged in the center of the frame 300 along a width direction thereof. Optionally, there is only one CCD camera which is arranged in the center of the frame 300, such that this CCD camera is able to better monitor the substrate 200 and collect its image information.

With reference to Figs. 4 to 6, in an optional solution of the present embodiment, said ceramic coating mechanism further comprises a ceramic coating transmission assembly 150; the ceramic coating driving assembly 120 is drivably connected to the ceramic coating nozzles 110 via the ceramic coating transmission assembly 150. By means of the ceramic coating transmission assembly 150, the ceramic coating driving assembly 120 is able to better drive the ceramic coating nozzles 110 to move.

In an optional solution of the present embodiment, the ceramic coating transmission assembly 150 comprises a gear wheel 151 and a gear rack 152 that meshes with the gear wheel 151; the ceramic coating transmission assembly 150 is drivably connected to the gear wheel 151 such that the gear wheel 151 is configured rotatable to in turn drive the gear rack 152 to move.

The ceramic coating nozzles 110 are arranged on the gear rack 152 and move with the movement of the gear rack 152; optionally, the ceramic coating nozzles 110 are fixed on the gear rack 152; or, optionally, the ceramic coating nozzles 110 are fixed on the gear rack 152 by lifting mechanisms in order to be able to adjust the distances between the ceramic coating nozzles 110 and the substrate 200, the lifting mechanisms are able to move the ceramic coating nozzles 110 up and down in relation to the gear rack 152, so as to change the distances between the ceramic coating nozzles 110 and the substrate 200.

It will be appreciated by those of ordinary skill in the art that other means may be adopted by the ceramic coating transmission assembly 150 other than the gear wheel 151 and the gear rack 152, such as motor and screw.

In an optional solution of the present embodiment, the number of the ceramic coating nozzles 110 can be determined based on the number of arranged pole pieces of the substrate 200. For example, there may be a plurality of ceramic coating driving assemblies 120; each ceramic coating driving assembly 120 is drivably connected to one ceramic coating nozzle 110; the plurality of ceramic coating driving assemblies 120 are successively arranged in spaced-apart relationship on the ceramic coating guide rail 130 along the axial direction of the ceramic coating guide rail 130. By drivably connecting one ceramic coating driving assembly 120 to one ceramic coating nozzle 110, position adjustment of the ceramic coating nozzles 110 is facilitated.

In an optional solution of the present embodiment, the ceramic coating nozzles 110 are arranged in pairs; the ceramics coated by each pair of ceramic coating nozzles 110 are respectively positioned on both sides of the pole piece.

In an optional solution of the present embodiment, the ceramic coating driving assembly 120 comprises a servo motor. The servo motor is of rapid response, having the advantages of controlled speed, accurate position accuracy etc.

The present embodiment further provides a pole piece coating system which comprises the above-mentioned ceramic coating mechanism. Said pole piece coating system is able to effectively avoid the ceramic coating from being influenced by the die clearance and the gasket size by adopting to the ceramic coating mechanism separate nozzles to spray the ceramic, and thus ensure that the size, thickness and surface density of the ceramic can be controlled within optimal ranges.

Since the ceramic coating system provided by the present embodiment comprises the above-mentioned ceramic coating mechanism, the above-disclosed technical features of the latter are also applied to said ceramic coating system and thus will not be repeated herein. The ceramic coating system described in the present embodiment also has the advantages of the above-mentioned ceramic coating mechanism and thus will not be repeated herein.

As shown in Figs. 1 to 4, in an optional solution of the present embodiment, the pole piece coating system further comprises:
a transmission mechanism 400 which is arranged on the frame 300 and is configured to transmit the movement of the substrate 200; the ceramic coating nozzles 110 are positioned on a side of the substrate 200 which is far from the transmission mechanism 400;
a slurry coating mechanism (not shown) which is arranged on the frame 300, is positioned on the same side of the substrate 200 as the ceramic coating nozzles 110 and is configured to spray slurry on the substrate 200; the slurry coating mechanism is positioned on the upstream of the ceramic coating nozzles 110 along the movement direction of the substrate 200. That is to say, the slurry coating mechanism first sprays the slurry on the substrate 200, then the ceramic coating nozzles 100 spray the ceramic liquid on the substrate 200, and then the video monitoring assembly 140 collects the image information of the surface of the substrate 200. By first spraying the slurry and then spraying the ceramic liquid, it is possible to overlap the edges of the slurry by the ceramic liquid, thus extremely reduce the phenomenon of debris-dropping on the edges of the slurry and therefore effectively reduce the risk of foil leakage; by adopting post-ceramic coating, it is also possible to ensure stability of ceramic width, having less requirement on the alignment between the cathode and anode inside the cell, allowing a certain size of misalignment between the cathode and anode, and reducing the risk of cell short-circuit.

In the present embodiment, the slurry of the slurry coating mechanism is the slurry of active substances; the slurry includes anode active substance and cathode active substance. For example, when the substrate 200 is an anode, the slurry coating mechanism sprays anode active substance on the substrate 200; when the substrate 200 is a cathode, the slurry coating mechanism sprays cathode active substance on the substrate 200.

In an optional solution of the present embodiment, the pole piece coating system further comprises:
a ceramic feeding driving assembly which is configured to supply ceramic to the ceramic coating nozzles 110;
   a slurry feeding driving assembly which is configured to supply slurry to the slurry coating mechanism;
a control mechanism which is electrically connected with the ceramic coating driving assembly 120, such that the control mechanism is able to control the ceramic coating driving assembly 120 and thus control positions of the ceramic coating nozzles 110; the video monitoring assembly 140, the ceramic feeding driving assembly and the slurry feeding driving assembly are respectively electrically connected to the control mechanism; the video monitoring assembly 140 is configured to send the monitored image information to the control mechanism such that the control mechanism controls the ceramic feeding driving assembly and the slurry feeding driving assembly correspondingly, so as to control qualities of the ceramic coating and the slurry coating.

Optionally, the ceramic feeding driving assembly comprises a ceramic pump which is electrically connected to the control mechanism or a solenoid valve which is electrically connected to the control mechanism; the control mechanism adjusts the ceramic that coated on the substrate 200 by increasing or reducing the ceramic pump or the solenoid valve and thus controls quality of the ceramic. Wherein the ceramic pump or the solenoid valve may be replaced by other functional equivalent structures.

Optionally, the slurry feeding driving assembly comprises a slurry pump which is electrically connected to the control mechanism or a solenoid valve which is electrically connected to the control mechanism; the control mechanism adjusts the slurry that coated on the substrate 200 by increasing or reducing the slurry pump or the solenoid valve and thus controls quality of the pole piece. Wherein the slurry pump or the solenoid valve may be replaced by other functional equivalent structures.

The present embodiment further provides a pole piece coating method which is applied to said pole piece coating system; the pole piece coating method comprises:

inputting information: inputting a width information of the substrate 200, a width information of pole piece regions to be produced and a width information of blank regions; wherein width of a pole piece region includes width of a slurry region and widths of ceramic regions;
arranging the ceramic coating nozzles 110 in place: driving the ceramic coating nozzles 110 to move along the axial direction of the ceramic coating guide rail 130 by means of the ceramic coating driving assembly 120, so as to correspond the positions of the ceramic coating nozzles 110 and the ceramic regions with each other; optionally, positioning the slurry feeding driving assembly on the upstream of the ceramic coating nozzles 110 and positioning the video monitoring assembly 140 on the downstream of the ceramic coating nozzles 110 along the movement direction of the substrate 200; optionally, driving the gear wheel 151 to rotate by the ceramic coating driving assembly 120 to move the ceramic coating nozzles 110 along the axial direction of the ceramic coating guide rail 130 together with the gear rack 152, so as to correspond the ceramic coating nozzles 110 to the positions of the ceramic regions;
coating: driving the slurry feeding driving assembly and the ceramic feeding driving assembly to start coating; the slurry feeding driving assembly feeds the slurry to the slurry coating mechanism, the latter coats the slurry on the substrate 200 to form the slurry regions; the ceramic feeding driving assembly is configured to feed the ceramic liquid to the ceramic coating nozzles 110, the latter spray the ceramic liquid on the substrate 200 to form the ceramic regions; optionally, the slurry coating mechanism comprises a die through which the slurry is coated on the substrate 200, and the ceramic is coated on the substrate 200 via separate ceramic coating nozzles 110;
monitoring: collecting image information of the slurry regions, the ceramic regions and the blank regions on the substrate 200 and send it to the control mechanism by means of the video monitoring assembly 140; the control mechanism correspondingly adjusts feeding speeds of the slurry feeding driving assembly and the ceramic feeding driving assembly; wherein the blank regions are regions of the substrate 200 which are not coated with the slurry and the ceramic liquid; when the widths of the ceramic regions are unacceptable (for example an acceptable ceramic region width is 3 to 5 mm), the video monitoring assembly 140 feedback the collected image information to a control system and the latter carries out adjustment by increasing or reducing the slurry feeding driving assembly and the ceramic feeding driving assembly, and when the ceramic regions and the slurry regions having clearance defects (for example occurring foil leakage or excessive blending regions), the video monitoring assembly 140 feedback the collected image information to the control system and the latter adjusts positions of the ceramic regions by controlling the ceramic coating driving assembly 120 to drive the ceramic coating nozzles 110 to move.

During the operation of said pole piece coating method, it is possible to protect the ceramic from the impact of other conditions by adopting separate ceramic coating nozzles 110 to coat the ceramic; by carrying out a closed-loop adjustment via the video monitoring assembly 140 and the control mechanism etc., it is possible to effectively improve the degrees of automation and thus avoid or reduce the problem of ceramic defect due to human negligence; by inputting the information in advance, it is possible to achieve automatic changeover of the pole piece manufacture and improve the degrees of automation to a certain extent.

In an optional solution of the present embodiment, in the step of inputting information, the pole piece region width information further comprises widths of blending regions located between the widths of the slurry regions and the widths of the ceramic regions. As shown in Fig. 7, the substrate 200 comprises pole piece regions 210 and blank regions 220, the latter are regions of the substrate 200 which are not coated with the ceramic liquid and the slurry. The pole piece regions 210 comprise slurry regions 211 which are configured to be coated with the slurry and ceramic regions 212 which are configured to be coated with the ceramic liquid; the filled patterns shown in Fig. 7 are for ease of distinguish of the slurry regions 211, the ceramic regions 212 and the blank regions 220. Generally, both sides of a slurry region 211 are coated with ceramic regions 212. For example, along the movement direction of the substrate 200, when the slurry coating mechanism is positioned on the upstream of the ceramic coating nozzles 110, the slurry coating mechanism first sprays slurry on the substrate 200 to form the slurry regions 211 and then the ceramic regions 212 are formed on the substrate 200 by the ceramic liquid sprayed by means of the ceramic coating nozzles 110, and some of the ceramic liquid is sprayed on the edges of the slurry regions 211 to form the blending regions when spraying the ceramic liquid; the risk of foil leakage can be reduced by adopting the blending regions.

Optionally, widths of the slurry regions 211 are 150 to 500 mm; for example, the widths of the slurry regions 211 may be 150 mm, 180 mm, 300 mm, 460 mm or 500 mm etc.

Optionally, widths of the ceramic regions 212 are 3 to 5 mm; for example, the widths of the ceramic regions 212 may be 3 mm, 3.3 mm, 4 mm, 4.5 mm or 5 mm etc.

Optionally, widths of the blending regions are 0 to 0.5 mm; for example, the widths of the blending regions may be 0 mm, 0.1 mm, 0.25 mm, 0.4 mm or 0.5 mm etc.

Optionally, widths of the blank regions 220 are 0 to 60 mm; for example, the widths of the blank regions 220 may be 0 mm, 18 mm, 30 mm, 46 mm or 60 mm etc.

In an optional solution of the present embodiment, in the step of monitoring, the control mechanism, based on the image information send by the video monitoring assembly 140, correspondingly controls the ceramic coating driving assembly 120 to drive the ceramic coating nozzles 110 to move for position adjustment.

The pole piece coating method provided by the present embodiment is applied to the above-mentioned pole piece coating system, and the technical features of the latter is also applied to said pole piece coating method and thus will not be repeated herein. The pole piece coating method described in the present embodiment has the advantages of the above-mentioned pole piece coating system and thus will not be repeated herein.

What described above is the preferred embodiment of the present application only rather than limiting thereof, and those of ordinary skill in the art can make various modifications and variations to the present application. Any of the modifications, equivalent substitutes, improvements etc. made within the spirit and principle of the present application shall be included in the protection scope thereof.

### Industrial Applicability

As mentioned above, the present disclosure provides a ceramic coating mechanism and a system and a method for pole piece coating. The present disclosure coats ceramic by separate nozzles, thus is possible to effectively avoid the ceramic coating from being influenced by the die clearance and the gasket size, and ensure that the size, thickness and surface density of the ceramic can be controlled within optimal ranges.

## Claims

1. A ceramic coating mechanism, **characterized by** comprising:
ceramic coating nozzles which are configured to spray a ceramic liquid on a substrate;
a ceramic coating driving assembly which is drivably connected to the ceramic coating nozzles, such that the ceramic coating nozzles are configured to be moved to corresponding positions of the substrate;
a ceramic coating guide rail on which the ceramic coating driving assembly is connected, the ceramic coating driving assembly is configured to drive the ceramic coating nozzles to move along an axial direction of the ceramic coating guide rail; and
a frame on which the ceramic coating guide rail is arranged.

2. The ceramic coating mechanism according to claim 1, **characterized by** further comprising a video monitoring assembly arranged on the frame;
the video monitoring assembly is positioned on the downstream of the ceramic coating nozzles along a movement direction of the substrate;
the video monitoring assembly is configured to collect image information of the ceramic-coated surface of the substrate.

3. The ceramic coating mechanism according to claim 2, **characterized in that** the video monitoring assembly comprises a CCD camera;
the CCD camera is one or more CCD cameras;
at least one of said CCD cameras is arranged in the center of the frame along a width direction of the frame.

4. The ceramic coating mechanism according to claim 2 or 3, **characterized by** further comprising a ceramic coating transmission assembly; the ceramic coating driving assembly is drivably connected to the ceramic coating nozzles via the ceramic coating transmission assembly.

5. The ceramic coating mechanism according to claim 4, **characterized in that** the ceramic coating transmission assembly comprises a gear wheel and a gear rack that meshes with the gear wheel; the ceramic coating transmission assembly is drivably connected to the gear wheel such that the gear wheel is configured rotatable; the ceramic coating nozzles are arranged on the gear rack and move with the movement of the gear rack; or
there are a plurality of ceramic coating driving assemblies, each of which is drivably connected to one of the ceramic coating nozzles; the plurality of ceramic coating driving assemblies are successively arranged in spaced-apart relationship on the ceramic coating guide rail along the axial direction of the ceramic coating guide rail; or
the ceramic coating nozzles are arranged in pairs; or
the ceramic coating driving assembly comprises a servo motor.

6. A pole piece coating system, **characterized by** comprising the ceramic coating mechanism according to any one of the claims 2 to 5.

7. The pole piece coating system according to claim 6, **characterized by** further comprising:
a transmission mechanism, which is arranged on the frame and is configured to transmit the movement of the substrate; the ceramic coating nozzles are positioned on a side of the substrate which is far from the transmission mechanism;
a slurry coating mechanism, which is arranged on the frame, is positioned on the same side of the substrate as the ceramic coating nozzles and is configured to spray slurry on the substrate; the slurry coating mechanism is positioned on the upstream of the ceramic coating nozzles along the movement direction of the substrate.

8. The pole piece coating system according to claim 7, **characterized by** further comprising:
a ceramic feeding driving assembly which is configured to supply the ceramic liquid to the ceramic coating nozzles;
a slurry feeding driving assembly which is configured to supply slurry to the slurry coating mechanism;
a control mechanism which is electrically connected with the ceramic coating driving assembly; the video monitoring assembly, the ceramic feeding driving assembly and the slurry feeding driving assembly are respectively electrically connected to the control mechanism; the video monitoring assembly is configured to send the monitored image information to the control mechanism such that the control mechanism controls the ceramic feeding driving assembly and the slurry feeding driving assembly correspondingly.

9. A pole piece coating method **characterized in that** it applies to the pole piece coating system according to claim 7 or 8; the pole piece coating method includes:
inputting information: inputting a width information of the substrate, a width information of pole piece regions to be produced and a width information of blank regions; wherein width of a pole piece region includes width of a slurry region and widths of ceramic regions;
arranging the ceramic coating nozzles in place: driving the ceramic coating nozzles to move along the axial direction of the ceramic coating guide rail by means of the ceramic coating driving assembly, so as to correspond the positions of the ceramic coating nozzles and the ceramic regions with each other;
coating: driving the slurry feeding driving assembly and the ceramic feeding driving assembly to start coating; the slurry feeding driving assembly feeds the slurry to the slurry coating mechanism, the latter coats the slurry on the substrate to form the slurry regions; the ceramic feeding driving assembly is configured to feed the ceramic liquid to the ceramic coating nozzles, the latter spray the ceramic liquid on the substrate to form the ceramic regions;
monitoring: collecting image information of the slurry regions, the ceramic regions and the blank regions on the substrate and send it to the control mechanism by means of the video monitoring assembly; the control mechanism correspondingly adjusts feeding speeds of the slurry feeding driving assembly and the ceramic feeding driving assembly; wherein the blank regions are regions of the substrate which are not coated with the slurry and the ceramic.

10. The pole piece coating method according to claim 9, **characterized in that**, in the step of inputting information, the pole piece region width information further comprises widths of blending regions located between the widths of the slurry regions and the widths of the ceramic regions;
in the step of monitoring, the control mechanism, based on the image information send by the video monitoring assembly, correspondingly controls the ceramic coating driving assembly to drive the ceramic coating nozzles to move for position adjustment.
